# EUROPEAN PATENT SPECIFICATION

(11) **EP 2 474 464 B1**
(45) Date of publication and mention of the grant of the patent: **08.04.2015**
(21) Application number: 11181560.1
(22) Date of filing: 16.09.2011
(51) Int. Cl.: B62K 19/06, B62K 19/32

(54) **Method of manufacturing frame tube and structure of the frame tube made therefrom**
Verfahren zur Herstellung eines Rahmenrohrs und Struktur des Rahmenrohrs daraus
Procédé de fabrication d'un tuyau de cadre et structure du tuyau de cadre ainsi fabriquée

(30) Priority: 10.01.2011 TW 100100765
(43) Date of publication of application: 11.07.2012
(73) Proprietor: J.D Components Co., Ltd., Shou Shui Hsiang, Chang Hua Hsien (TW)
(72) Inventor: Chan, Kun-Do, 709 Tainan City (TW)
(74) Representative: Becker Kurig Straus

(56) References cited:
- WO-A1-96/09159
- WO-A1-2005/057069

## Description

### BACKGROUND OF THE INVENTION

### 1. Field of the Invention

The present invention relates generally to a frame tube of a baby walker, bicycle, skateboard or scooter, and more specifically to a method of manufacturing a frame tube and the structure of the frame tube made therefrom.

### 2. Description of the Related Art

As far as the frame of a baby walker, bicycle, skateboard or scooter is concerned, a head tube of the frame is used for pivotal connection of a stem and a fork head stem, such that the front wheel can be driven to steer by the pivotal movement of the stem and the fork head stem relative to the head tube. The conventional head tube is manufactured having a tubular shape for insertion of the stem and the fork head stem.

WO 2005/057069 discloses a frame tube member comprising an outer tube body, an inner tube body received in the outer tube body, and a plurality of ribs connected with the outer tube body and the inner tube body.

However, if the head tube is to be made having a specific appearance, such as a spherical shape, by a conventional cutting processing, e.g. a computer numerical control (CNC) machining, a raw workpiece having a certain amount of volume needs to be used in the cutting process, causing the increase of material cost; and further, when the spherical head tube is produced from a cylindrical raw workpiece into shape by cutting, the wall thickness between internal and external wall surfaces at middle portion of the finished spherical head tube will be thicker than that at other portions, resulting in that the spherical head tube has a disadvantage of heavy weight.

### SUMMARY OF THE INVENTION

The present invention has been accomplished in view of the above-noted circumstances. It is therefore one obj ective of the present invention to provide a method of manufacturing a frame tube having a specific appearance, which is capable of saving material cost and reducing the weight of the frame tube.

To achieve this objective of the present invention, the method of manufacturing the frame tube comprises the steps of providing a tubular member having an outer tube body, an inner tube body received in the outer tube body, and a plurality of ribs connected with the outer tube body and the inner tube body, cutting a part of each of the ribs from two ends of the tubular member to create a notch between each of the ribs and the outer tube body, and pressing the two ends of the outer tube body to enable the outer surface of the outer tube body to be deformed into a spherical appearance.

In accordance with the method of manufacturing the frame tube, the spherical frame tube can be made at a low material cost, and thanks to the ribs arranged between the outer tube body and the inner tube body, the spherical frame tube is lightweight with a sufficient strength and stability.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a flow chart showing the steps of the method of manufacturing the frame tube according to an embodiment of the present invention;
FIG. 2 is a perspective view of the tubular member used in the method of manufacturing the frame tube according to the embodiment of the present invention;
FIG. 3 is similar to FIG. 2, but showing that the ribs are cut;
FIG. 4 is a perspective view of the frame tube made by the method of manufacturing the frame tube according to the embodiment of the present invention;
FIG. 5 is a perspective view, showing that the frame tube made by the method of manufacturing the frame tube according to the embodiment of the present invention is applied to a baby walker; and
FIG. 6 is a perspective view, showing that the frame tube made by the method of manufacturing the frame tube according to the embodiment of the present invention is applied to a skateboard.

### DETAILED DESCRIPTION OF THE INVENTION

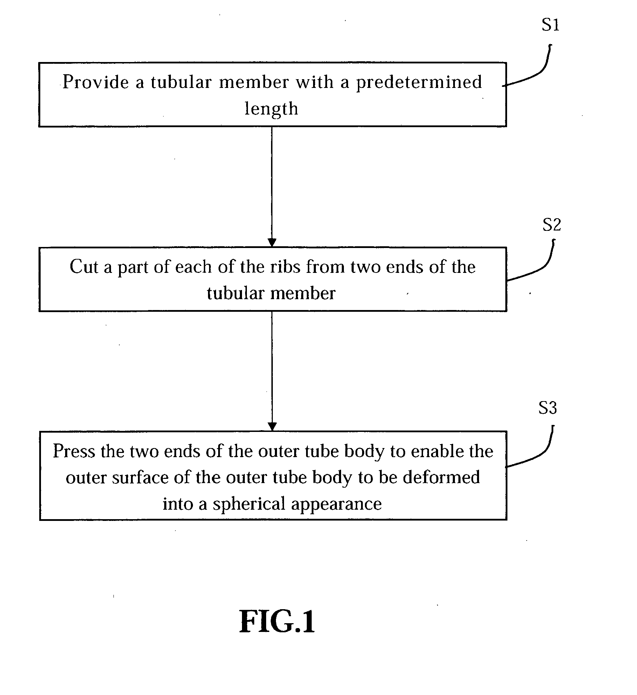

As shown in FIG. 1, a method of manufacturing a frame tube 10 in accordance with a preferred embodiment of the present invention comprises the following steps.

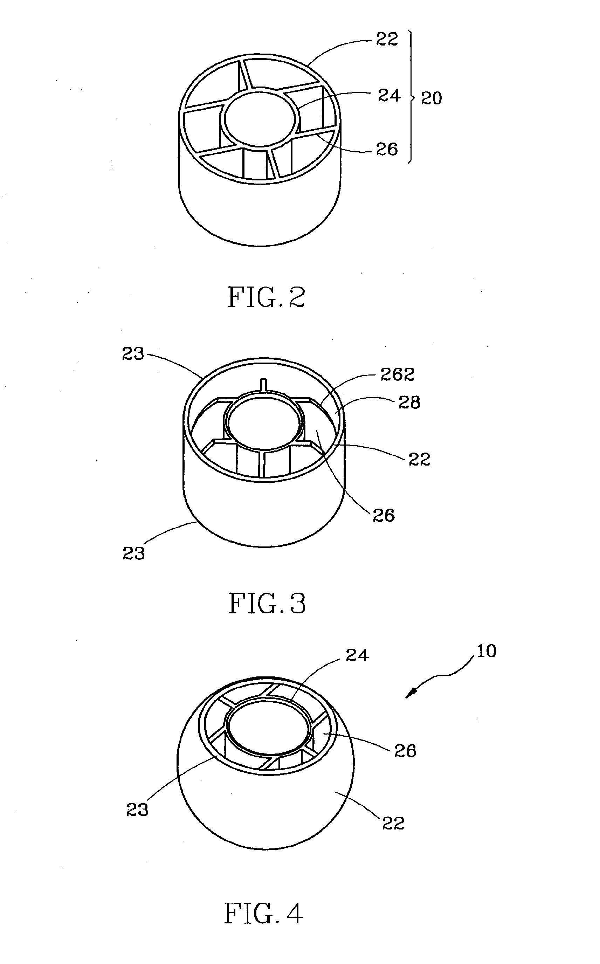

The first step S1 is to provide a tubular member 20 having a predetermined length with an outer tube body 22, an inner tube body 24 received in the outer tube body 22, and a plurality of ribs 26 integrally connected with the outer tube body 22 and the inner tube body 24, as shown in FIG. 2. In this embodiment, the tubular member 20 is an elongated aluminum extruded member, which is cut by a saw to the predetermined length.

The second step S2 is to cut a part of each of the ribs 26 from two ends 23 of the tubular member 20 in such a way that a notch 28 is formed between each of the ribs 26 and the outer tube body 22, as shown in FIG 3. In this embodiment, a junction between each of the ribs 26 and the outer tube body 22 is cut by using a CNC machine to enable each of the ribs 26 to have a curved edge 262 defining the notch 28 with the outer tube body 22, and furthermore, a distance between the outer tube body 22 and each of the curved edges 262 is gradually decreased from one of the two ends 23 of the outer tube body 22 towards the center of the outer tube body 22. After the ribs 26 are cut, a step of annealing the outer tube body 22 can be carried out for eliminating the internal stress of the outer tube body 22.

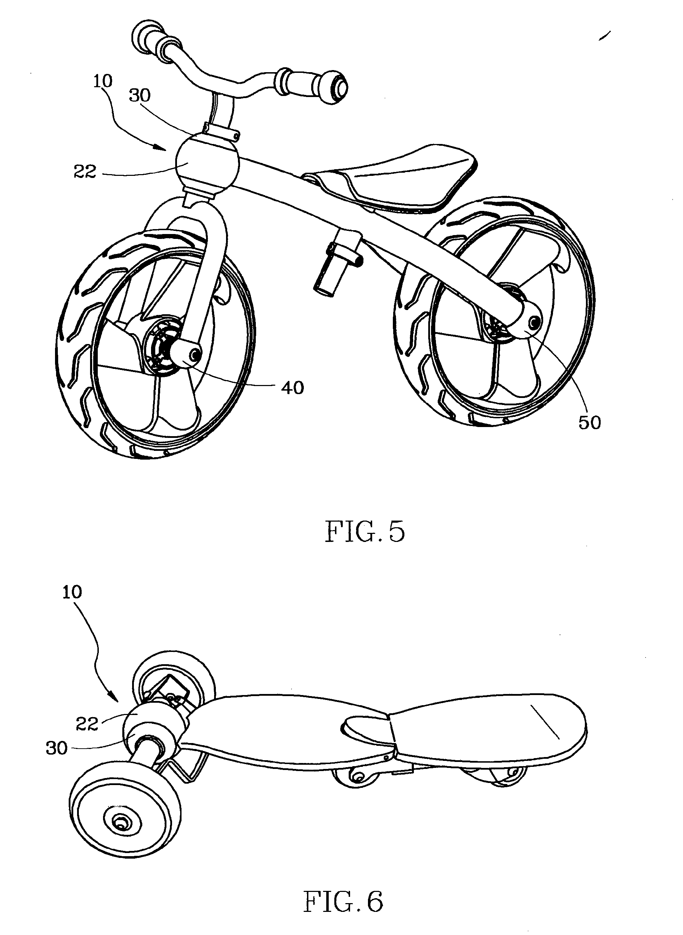

The third step S3 is to press the two ends 23 of the outer tube body 22 to enable the outer surface of the outer tube body 22 to be deformed into a spherical appearance in such a way that the two ends 23 of the outer tube body 22 are forced to be abutted against the curved edges 262 of the ribs 26, thereby finishing the frame tube 10, as shown in FIG. 4. Preferably, a step of coupling two end covers 30, which can be seen in FIGS. 5 and 6, to the two ends 23 of the outer tube body 22 can be performed after the third step S3. The two end covers 30 may be made from plastic or aluminum and may be respectively provided with a curved outer surface to be matched with the spherical outer surface of the outer tube body 22.

The method of manufacturing the frame tube 10 is described as above, and the structure of the frame tube 10 of the present invention is outlined hereinafter.

As shown in FIG. 4, the frame tube 10 includes an outer tube body 22 having a spherical outer surface and two open ends 23 such that the distance between the two ends 23 of the outer tube body 22 is smaller than the center diameter of the outer tube body 22. The frame tube 10 further includes an inner tube body 24 received in the outer tube body 22 for insertion of a stem (not shown), and ribs 26 connected with the outer tube body 22 and the inner tube body 24 and each having an extending direction perpendicular to an axial direction of the outer tube body 22 for enhancing the structural strength. Preferably, two end covers 30, as shown in FIGS. 5 and 6, are coupled with the two ends 23 of the outer tube body 22 for preventing dust or foreign objects from entering the frame tube 10. In brief, the spherical frame tube 10 can be made from the method of the present invention in a material cost saving and weight reducing manner compared to the prior art method. In addition, the finished frame tube 10 may have a sufficient structural strength and stability thanks to the arrangement of the ribs 26.

To deserve to be mentioned, the frame tube 10 can be applied to a baby walker as shown in FIG. 5, bicycle, skateboard as shown in FIG. 6 or scooter. As shown in FIG. 5, the frame tube can be used as a junction 40 between the front fork end and the front wheel or a junction 50 between the rear fork end and the rear wheel, or a junction between the seat post and the seat tube or the like.

## Claims

1. A method of manufacturing a frame tube (10), comprising the step of:
a) providing a tubular member (20) having a predetermined length with an outer tube body (22), an inner tube body (24) received in the outer tube body (22), and a plurality of ribs (26) connected with the outer tube body (22) and the inner tube body (24);
**characterised in that** the method further comprises the steps of :
b) cutting a part of each of the ribs (26) from two ends (23) of the tubular member (20) to create a notch (28) between each of the ribs (26) and the outer tube body (22); and
c) pressing the two ends (23) of the outer tube body (22) to enable the outer surface of the outer tube body (22) to be deformed into a spherical appearance.

2. The method as claimed in claim 1, wherein the tubular member (20) is an aluminum extruded member.

3. The method as claimed in claim 1, wherein the tubular member (20) is cut by a saw in step b).

4. The method as claimed in claim 1, wherein the step b) of cutting a part of each of the ribs is accomplished by cutting ajunction between each of the ribs (26) and the outer tube body (22).

5. The method as claimed in claim 4, wherein each of the ribs (26) is cut having a curved edge (262) defining the notch (28) with the outer tube body (22); a distance between the outer tube body (22) and each of the curved edges (262) is gradually decreased from the end (23) of the outer tube body (22) toward a center of the outer tube body.

6. The method as claimed in claim 5, wherein the two ends (23) of the outer tube body (22) are abutted against the curved edges (262) of the ribs (26) in step c).

7. The method as claimed in claim 1, wherein each of the ribs (26) is cut by using a CNC machine.

8. The method as claimed in claim 1, further comprising a step of annealing the outer tube body (22) between the step b) and the step c) for eliminating the internal stress of the outer tube body (22).

9. The method as claimed in claim 1, further comprising a step of coupling two end covers (30) to the two ends (23) of the outer tube body (22) after the step c).

10. A frame tube (10) comprising:
an outer tube body (22) having a spherical outer surface and two open ends (23), a distance of the two open ends (23) of the outer tube body (22) being smaller than a center diameter of the outer tube body (22);
an inner tube body (24) received in the outer tube body (22); and
a plurality of ribs (26) respectively connected with the outer tube body (22) and the inner tube body (24), and each having an extending direction perpendicular to an axial direction of the outer tube body (22).

11. The frame tube (10) as claimed in claim 10, further comprising two end covers (30) coupled with the two open ends (23) of the outer tube body (22), and each having a curved outer surface to be matched with the spherical outer surface of the outer tube body (22); the two end covers (30) are made from plastic or aluminum.

## Patentansprüche

1. Verfahren zur Herstellung eines Rahmenrohrs (10), welches die Schritte umfasst:
a) Bereitstellen eines röhrenförmigen Elements (20) mit einer bestimmten Länge und einem äußeren Röhrenkörper (22), einem inneren Röhrenkörper (24), der in dem äußeren Röhrenkörper (22) aufgenommen ist, und mehreren Rippen (26), die mit dem äußeren Röhrenkörper (22) und dem inneren Röhrenkörper (24) verbunden sind; **dadurch gekennzeichnet, dass** das Verfahren weiter die Schritt umfasst:
b) Schneiden eines Teils einer jeden Rippe (26) von zwei Enden (23) des röhrenförmigen Elements (20), um eine Vertiefung (28) zwischen jeder der Rippen (26) und dem äußeren Röhrenkörper (22) auszubilden; und
c) Drücken der zwei Enden (23) des äußeren Röhrenkörpers (22), so dass eine Deformierung der äußeren Oberfläche des äußeren Röhrenkörpers (22) in eine kugelige Form ermöglicht wird.

2. Verfahren nach Anspruch 1, wobei das röhrenförmige Element (20) ein extrudiertes Aluminium-Element ist.

3. Verfahren nach Anspruch 1, wobei das röhrenförmige Element (20) in Schritt b) durch eine Säge geschnitten wird.

4. Verfahren nach Anspruch 1, wobei der Schritt b) des Schneidens eines Teils einer jeden Rippe durch Schneiden einer Verbindung zwischen jeder der Rippen (26) und dem äußeren Röhrenkörper (22) erreicht wird.

5. Verfahren nach Anspruch 4, wobei jede der Rippen (26) mit einer gekrümmten Kante (262) geschnitten wird, die mit dem äußeren Röhrenkörper (22) eine Vertiefung (28) ausbildet; worin eine Entfernung zwischen dem äußeren Röhrenkörper (22) und jeder der gekrümmten Kanten (262) vom Ende (23) des äußeren Röhrenkörpers (22) auf das Zentrum des äußeren Röhrenkörpers langsam abnimmt.

6. Verfahren nach Anspruch 5, wobei die zwei Enden (23) des äußeren Röhrenkörpers (22) auf den gekrümmten Kanten (262) der Rippen (26) in Schritt c) aufliegen.

7. Verfahren nach Anspruch 1, wobei jeder der Rippen (26) unter Verwendung einer CNC-Maschine geschnitten wird.

8. Verfahren nach Anspruch 1, welches weiter einen Schritt umfasst, den äußeren Röhrenkörper (22) zwischen Schritt b) und Schritt c) zur Eliminierung der inneren Beanspruchung des äußeren Röhrenkörper (22) zu annealen.

9. Verfahren nach Anspruch 1, welches weiter einen Schritt umfasst, nach Schritt c) zwei Endabdeckungen (30) an die zwei Enden (23) des äußeren Röhrenkörpers (22) zu koppeln.

10. Rahmenrohr (10), welches umfasst:
einen äußeren Röhrenkörper (22) mit einer kugeligen äußeren Oberfläche und zwei offenen Enden (23), worin eine Entfernung zwischen den zwei offenen Enden (23) des äußeren Röhrenkörpers (22) kleiner ist als ein Zentrums-Durchmesser des äußeren Röhrenkörpers (22);
einen inneren Röhrenkörper (24), der in dem äußeren Röhrenkörper (22) aufgenommen ist; und
mehrere Rippen (26), die mit dem äußeren Röhrenkörper (22) und dem inneren Röhrenkörper (24) verbunden sind und jeweils eine Erstreckungsrichtung senkrecht zu einer axialen Richtung des äußeren Röhrenkörpers (22) aufweisen.

11. Rahmenrohr (10) nach Anspruch 10, welches weiter zwei Endabdeckungen (30) aufweist, die mit den zwei offenen Enden (23) des äußeren Röhrenkörpers (22) gekoppelt sind, und worin jede eine gekrümmte äußere Oberfläche aufweist, die zu der kugeligen äußeren Oberfläche des äußeren Röhrenkörpers (22) passt, worin die zwei Endabdeckungen (30) aus Kunststoff oder Aluminium bestehen.

## Revendications

1. Procédé de fabrication d'un tube de cadre (10), comprenant les étapes consistant à :
a) fournir à un membre tubulaire (20) possédant une longueur prédéterminée, un corps de tube externe (22), un corps de tube interne (24) reçu dans le corps de tube externe (22), et une pluralité de nervures (26) reliées au corps de tube externe (22) et au corps de tube interne (24) ;
**caractérisé en ce que** le procédé comprend en outre les étapes consistant à :
b) couper une partie de chacune des nervures (26) à partir de deux extrémités (23) du membre tubulaire (20) de façon à créer une encoche (28) entre chacune des nervures (26) et le corps de tube externe (22) ; et
c) presser les deux extrémités (23) du corps de tube externe (22) pour permettre à la surface externe du corps de tube externe (22) d'être déformée en une apparence sphérique.

2. Procédé selon la revendication 1, dans lequel le membre tubulaire (20) est un membre extrudé en aluminium.

3. Procédé selon la revendication 1, dans lequel le membre tubulaire (20) est coupé par une scie dans l'étape b).

4. Procédé selon la revendication 1, dans lequel l'étape b) de découpe d'une partie de chacune des nervures est accomplie en coupant une jonction entre chacune des nervures (26) et le corps de tube externe (22).

5. Procédé selon la revendication 4, dans lequel chacune des nervures (26) est coupée en ayant un bord courbé (262) définissant l'encoche (28) avec le corps de tube externe (22) ; une distance entre le corps de tube externe (22) et chacun des bords courbés (262) est progressivement diminuée de l'extrémité (23) du corps de tube externe (22) à un centre du corps de tube externe.

6. Procédé selon la revendication 5, dans lequel les deux extrémités (23) du corps de tube externe (22) sont en butée contre les bords courbés (262) des nervures (26) dans l'étape c).

7. Procédé selon la revendication 1, dans lequel chacune des nervures (26) est coupée en utilisant une machine à commande numérique.

8. Procédé selon la revendication 1, comprenant en outre une étape de recuit du corps de tube externe (22) entre l'étape b) et l'étape c) pour éliminer la contrainte interne du corps de tube externe (22).

9. Procédé selon la revendication 1, comprenant en outre une étape de couplage de deux couvercles d'extrémité (30) aux deux extrémités (23) du corps de tube externe (22) après l'étape c).

10. Tube de cadre (10) comprenant:
un corps de tube externe (22) possédant une surface externe sphérique et deux extrémités ouvertes (23), une distance des deux extrémités ouvertes (23) du corps de tube externe (22) étant plus petite qu'un diamètre de centre du corps de tube externe (22) ;
un corps de tube interne (24) reçu dans le corps de tube externe (22) ; et
une pluralité de nervures (26) reliées respectivement au corps de tube externe (22) et au corps de tube interne (24), et comportant chacune une direction d'extension perpendiculaire à une direction axiale du corps de tube externe (22).

11. Tube de cadre (10) selon la revendication 10, comprenant en outre deux couvercles d'extrémité (30) couplés aux deux extrémités ouvertes (23) du corps de tube externe (22), et comportant chacun une surface externe courbée destinée à être mise en correspondance avec la surface externe sphérique du corps de tube externe (22) ; les deux couvercles d'extrémité (30) sont constitués de plastique ou d'aluminium.
